# EUROPÄISCHE PATENTSCHRIFT

(11) **EP 1 078 167 B1**
(45) Veröffentlichungstag und Bekanntmachung des Hinweises auf die Patenterteilung: **09.06.2004**
(21) Anmeldenummer: 99924911.3
(22) Anmeldetag: 08.05.1999
(51) Int. Cl.: F15C 5/00

(54) **MIKROVENTIL**
MICROVALVE
MICROSOUPAPE

(30) Priorität: 14.05.1998 DE 19821638
(43) Veröffentlichungstag der Anmeldung: 28.02.2001
(73) Patentinhaber: FESTO AG & Co, 73734 Esslingen (DE)
(72) Erfinder: STOLL, Kurt, D-73732 Esslingen (DE); POST, Peter, D-73760 Ostfildern (DE); WEINMANN, Michael, D-73655 Plüderhausen (DE); VOLLMER, Herbert, D-73274 Notzingen (DE); MUTH, Andreas, D-73230 Kirchheim (DE)
(74) Vertreter: Abel, Martin, Dipl.-Ing.
(86) Internationale Anmeldenummer: PCT/EP1999/003165
(87) Internationale Veröffentlichungsnummer: WO 1999/058860

(56) Entgegenhaltungen:
- EP-A- 0 485 739
- DE-A- 4 417 251
- DE-A- 19 522 806
- JP-A- 6 341 556
- JP-A- 7 158 757
- US-A- 4 826 131
- US-A- 5 785 295
- PATENT ABSTRACTS OF JAPAN vol. 095, no. 011, 26. Dezember 1995 (1995-12-26) & JP 07 229579 A (NIPPONDENSO), 29. August 1995 (1995-08-29)
- HUFF M A ET AL: "FLOW CHARACTERISTICS OF A PRESSURE-BALANCED MICROVALVE" INTERNATIONAL CONFERENCE ON SOLID-STATE SENSORS AND ACTUATORS, 7. Juni 1993 (1993-06-07), Seiten 98-101, XP000618173
- KOHL M ET AL: "Development of stress-optimised shape memory microvalves" SENSORS AND ACTUATORS A, Bd. 72, Nr. 3, 16. Februar 1999 (1999-02-16), Seite 243-250 XP004156294 ISSN: 0924-4247

## Beschreibung

Gegenstand der vorliegenden Erfindung ist ein Mikroventil gemäß dem Oberbegriff des Anspruchs 1.

Solch ein Mikroventil ist aus DE-A-19 522 806 bekannt.

Bei Mikroventilen besteht allgemein die Problematik, daß die durch die am häufigsten eingesetzten, auf elektrostatischem Wirkprinzip basierenden Aktoren erzeugbaren Schaltkräfte mit zunehmendem Elektrodenabstand stark abnehmen. Um gleichwohl ausreichend große Schalthübe des Ventilgliedes und damit verbunden hohe Durchflußwerte realisieren zu können, bedarf es großer Elektrodenflächen und somit großer Ventilgliedflächen. Diese großen Flächen aber haben den Nachteil, daß sich eine große Empfindlichkeit gegenüber Druckdifferenzen zwischen den beiden vom Ventilglied in der Ventilkammer abgeteilten Teilkammern einstellt, was die Funktionsfähigkeit des Mikroventils stark beeinträchtigen kann.

Es ist die Aufgabe der vorliegenden Erfindung, ein Mikroventil zu schaffen, dessen Empfindlichkeit gegen Druckdifferenzen zum Erhalt einer zuverlässigeren Funktionsweise reduziert ist.

Gelöst wird diese Aufgabe durch ein Mikroventil, das eine Ventilkammer enthält, in der sich ein die Ventilkammer in zwei Teilkammern unterteilendes, membran- oder plattenartiges Ventilglied befindet, mit einer dem Ventilglied gegenüberliegenden, eine erste der beiden Teilkammern begrenzenden Kanalschicht, die an ihrer dem Ventilglied zugewandten Seite eine mit einem Zuströmkanal kommunizierende Zuströmöffnung und mindestens eine mit einem Abströmkanal kommunizierende Abströmöffnung aufweist, wobei das Ventilglied zwischen einer die Zuströmöffnung verschließenden Schließstellung und einer die Zuströmöffnung freigebenden und dabei ein überströmen von Fluid vom Zuströmkanal zum Abströmkanal durch die erste Teilkammer hindurch ermöglichenden Offenstellung bewegbar ist, und mit in der Offenstellung des Ventilgliedes wirksamen Druckentlastungsmitteln, die wenigstens eine mit zumindest teilweiser überdeckung gegenüberliegend der Abströmöffnung am Ventilglied vorgesehene, eine Expansion des überströmenden Fluides ermöglichende Expansionsvertiefung enthalten, die durch das Ventilglied hindurch mit der zweiten Teilkammer in Verbindung steht.

Auf diese Weise liegt ein Mikroventil vor, das auch bei verhältnismäßig großflächiger Ausgestaltung des quer zu seiner Ausdehnungsrichtung bewegbaren Ventilgliedes in seiner Funktionsfähigkeit erheblich weniger durch Druckdifferenzen zwischen den beiden Teilkammern beeinträchtigt wird. Erreicht wird dies maßgeblich dadurch, daß die beiden Teilkammern durch das Ventilglied hindurch fluidisch miteinander kommunizieren können, wobei auf der der Zuströmöffnung und der Abströmöffnung zugewandten Seite des Ventilgliedes gegenüberliegend der jeweiligen Abströmöffnung eine das in der Offenstellung vom Zuströmkanal zum Abströmkanal überströmende Fluid, insbesondere Druckluft, in seinem Strömungsverhalten positiv beeinflussende Expansionsvertiefung vorgesehen ist. Ohne derartige Druckentlastungsmittel würde sich das in die erste Teilkammer zuströmende Fluid mit hoher Geschwindigkeit über die gesamte Ventilgliedfläche ausbreiten und zwischen dieser und der Kanalschicht einen raschen Druckaufbau hervorrufen, der einem sich unmittelbar anschließenden Umschaltvorgang des Ventilgliedes eine hohe Kraft entgegensetzen würde. Die Expansionsvertiefung bewirkt nun in dem der Abströmöffnung gegenüberliegenden Bereich eine Expansion und Verwirbelung der zuvor noch beschleunigten Fluidströmung, was die Strömungsgeschwindigkeit reduziert und das Einströmen des Fluides in den Abströmkanal begünstigt. Gleichzeitig kann das durch die Expansionsvertiefung quasi aufgefangene bzw. abgebremste Fluid durch das Ventilglied hindurch unmittelbar zur gegenüberliegenden Teilkammer gelangen, so daß sich dort rasch ein dem Druck in der ersten Teilkammer entsprechender Gegendruck aufbaut, so daß das Ventilglied zumindest weitestgehend druckentlastet bzw. druckausgeglichen ist. Ein sich anschließender Umschaltvorgang kann somit sehr zuverlässig mit den vorhandenen Aktorkräften ausgeführt werden.

Vorteilhafte Weiterbildungen der Erfindung gehen aus den Unteransprüchen hervor.

Eine besonders effektive und verzögerungsarme Druckentlastung stellt sich ein, wenn die Expansionsvertiefung so ausgeführt ist, daß sie die ihr zugeordnete Abströmöffnung vollständig überdeckt. Dabei können die sich gegenüberliegenden Öffnungen die gleiche Breite aufweisen.

Vorzugsweise sind die Expansionsvertiefungen quer zur Schaltrichtung so weit von der Zuströmöffnung beabstandet, daß in der Offenstellung ein unmittelbarer Fluideintritt aus dem Zuströmkanal verhindert ist. Dadurch ist gewährleistet, daß das zuströmende Fluid nicht sofort zur zweiten Teilkammer durchschießt und dort einen das Ventilglied in Richtung der Schließstellung beaufschlagenden überdruck aufbaut.

Es wäre möglich, die Expansionsvertiefung als schlitzartige Durchbrechung auszuführen, die das Ventilglied quer zu seiner Ausdehnungsrichtung durchsetzt. Um eine verbesserte mechanische Stabilität des Ventilgliedes zu gewährleisten, wird jedoch eine Bauform bevorzugt, bei der die Expansionsvertiefung nutähnlich mit Längsgestalt ausgeführt ist, wobei sie über mindestens einen das Ventilglied durchsetzenden Entlastungskanal mit der zweiten Teilkammer kommuniziert. Anstelle eines einzigen Entlastungskanals können auch mehrere Entlastungskanäle vorgesehen sein, die mit Abstand zueinander in die Expansionsvertiefung einmünden. Trotz das Ventilglied durchsetzender Verbindungskanäle ergibt sich somit eine biegeund verwindungssteife Bauform des Ventilgliedes, was insbesondere auch in der Schließstellung das Zusammenwirken zwischen dem Ventilglied und der zu verschließenden öffnung begünstigt.

Eine besonders vorteilhafte Ausführungsform des Mikroventils verfügt über eine lineare, schlitzartige Zuströmöffnung, die an beiden Längsseiten jeweils von einer ebenfalls Längsverlauf besitzenden und parallel ausgerichteten Abströmöffnung flankiert wird, wobei jeder Abströmöffnung eine am Ventilglied vorgesehene Expansionsvertiefung gegenüberliegt. Das zuströmende Fluid kann sich somit im ersten Teilraum nach entgegengesetzten Seiten ausbreiten, wobei es aber schon nach kurzer Wegstrecke in der schon geschilderten Weise abgebremst und zu einer Strömung in die Abströmkanäle und die zweite Teilkammer veranlaßt wird.

Um den druckentlastenden Effekt noch weiter zu optimieren, kann vorgesehen sein, daß, bezogen auf die Überströmrichtung des Fluides, einer Expansionsvertiefung eine oder mehrere Zusatz-Expansionsvertiefungen nachgeschaltet sind, denen zwar keine Abströmöffnung gegenüberliegt, die jedoch gleichfalls mit der zweiten Teilkammer in Verbindung stehen und an der vorgeschalteten Expansionsvertiefung vorbeigeströmtes Fluid in vergleichbarer Weise zur entgegensetzten zweiten Teilkammer führen.

Eine besonders vorteilhafte Ausgestaltung des Ventilgliedes, die ein gutes Strömungsverhalten mit hoher mechanischer Stabilität und günstigen Herstellungsmöglichkeiten verbindet, sieht vor, daß in beiden Ventilgliedflächen jeweils eine Gruppe zueinander paralleler nutartiger Vertiefungen vorgesehen ist, wobei die Vertiefungen beider Gruppen quer zueinander verlaufen und mit einer Tiefe ausgeführt sind, daß sie an den Kreuzungsstellen ineinander übergehen, wobei mindestens eine Expansionsvertiefung und bei Bedarf mindestens eine Zusatz-Expansionsvertiefung Bestandteil der der ersten Teilkammer zugeordneten Vertiefungen ist.

Die zweite Teilkammer ist gegenüberliegend dem Ventilglied von einer weiteren Schicht begrenzt, die je nach gewünschtem Ventiltyp als kanallose Deckschicht oder als weitere, mindestens einen Fluidkanal enthaltende Kanalschicht ausgeführt sein kann.

Nachfolgend wird die Erfindung anhand eines in der Zeichnung dargestellten Ausführungsbeispieles näher erläutert. Es zeigen im einzelnen:
- Fig. 1: eine bevorzugte Bauform des erfindungsgemäßen Mikroventils in vergrößerter Explosionsdarstellung, wobei die üblicherweise fest zusammengefügten Schichten im voneinander abgehobenen Zustand gezeigt sind,

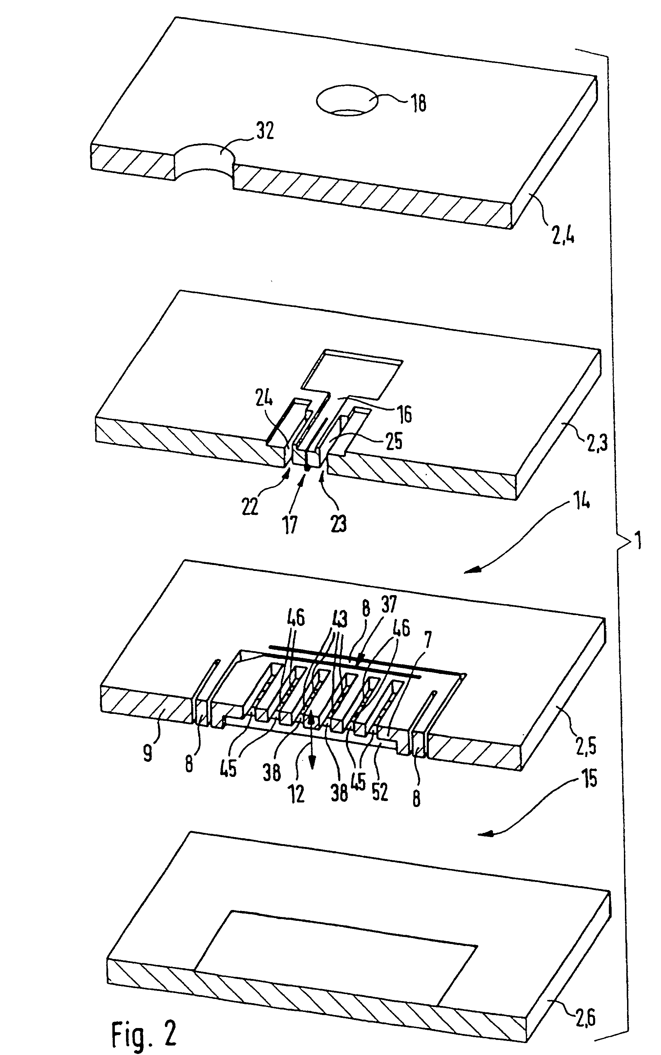

- Fig. 2: das Mikroventil aus Fig. 1 in vergleichbarer Darstellungsweise mit einem Querschnitt durch alle Schichten gemäß Schnittlinie II-II aus Fig. 1,
- Fig. 3: einen vergrößerten Ausschnitt der Schnittdarstellung aus Fig. 2 im aufeinanderliegenden Zustand der einzelnen Schichten, nochmals vergrößert,

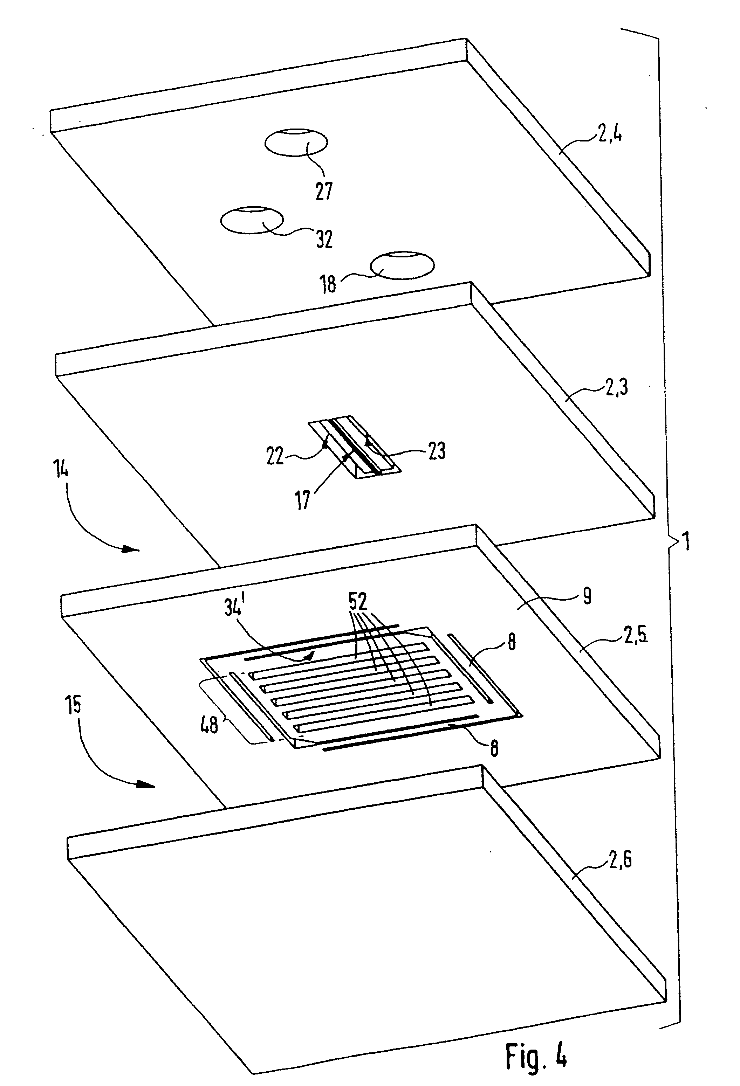

- Fig. 4: eine der Fig. 1 vergleichbare Explosionsdarstellung des Mikroventils mit Blickrichtung auf die entgegengesetzten Schichtflächen und
- Fig. 5: eine Einzeldarstellung der bei dem beispielsgemäßen Mikroventil verwendeten Ventilgliedschicht mit schräger Blickrichtung auf die der Kanalschicht zugewandte Schichtseite etwa mit Blickrichtung gemäß Pfeil V aus Fig. 1.

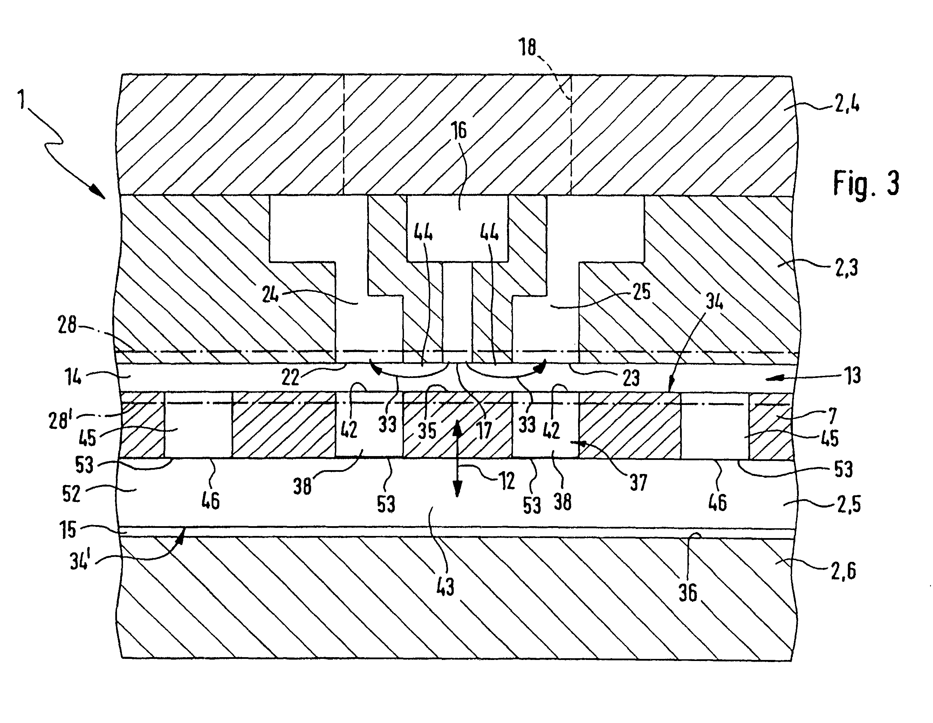

Das in seiner Gesamtheit mit Bezugsziffer 1 versehene Mikroventil läßt sich durch an sich bekannte Mikrostrukturierungsverfahren herstellen. Es verfügt über mehrere plattenartige Schichten 2 - beim Ausführungsbeispiel vier Stück -, die in der Regel einzeln strukturiert und anschließend mit zueinander parallelen Schichtflächen aneinandergesetzt und fest miteinander verbunden werden. Der daraus resultierende Schicht- bzw. Sandwichaufbau ist aus Fig. 3 gut ersichtlich.

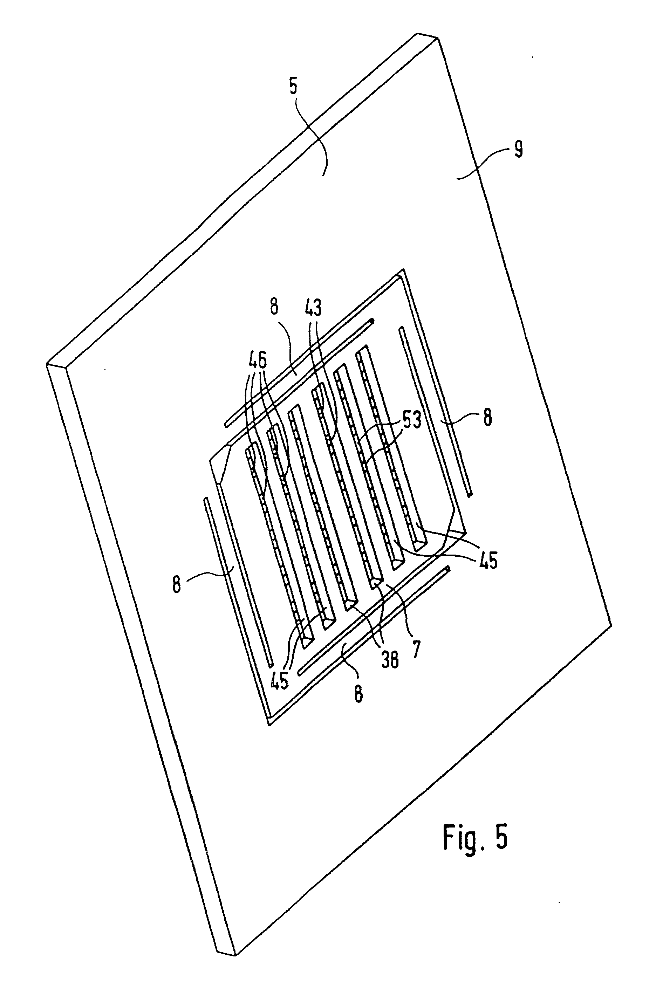

Unter den Schichten 2 des beispielsgemäßen Mikroventils 1 befindet sich eine Kanalschicht 3, die an ihrer einen flächigen Seite von einer Anschlußschicht 4 und an ihrer entgegengesetzten flächigen Seite von einer Ventilgliedschicht 5 flankiert ist, auf die noch eine Deckschicht 6 folgt. Die Fig. 5 zeigt eine Einzeldarstellung der Ventilgliedschicht 5.

Aus der Ventilgliedschicht 5 ist ein in sich starres plattenartiges Ventilglied 7 herausstrukturiert. Es steht über mehrere biegeflexible Haltearme 8 in einstückiger Verbindung mit einem es umschließenden rahmenartigen Schichtgrundkörper 9. Auf diese Weise ist das Ventilglied 7 rechtwinkelig zur Ausdehnungsebene der Ventilgliedschicht 5 relativ zum Schichtgrundkörper 9 bewegbar, wobei diese Bewegung als durch Doppelpfeil angedeutete Schaltbewegung 12 bezeichnet sei.

Der rahmenartige Schichtgrundkörper 9 der Ventilgliedschicht 5 begrenzt zusammen mit der Kanalschicht 3 und der Deckschicht 6 eine das Ventilglied 7 aufnehmende Ventilkammer 13. Durch das Ventilglied 7 ist die Ventilkammer 13 in eine der Kanalschiebt 3 zugewandte erste Teilkammer 14 und eine der Deckschicht 6 zugewandte zweite Teilkammer 15 unterteilt.

Die Kanalschicht 3 enthält einen Zuströmkanal 16. Er durchsetzt die Kanalschicht 3 zweckmäßigerweise rechtwinkelig zu ihrer Ausdehnungsebene. Dabei mündet er mit einer insbesondere lineare Längsgestalt aufweisenden schlitzartigen Zuströmöffnung 17 in die erste Teilkammer 14. Andererseits steht er mit einer die Anschlußschicht 4 durchsetzenden ersten Anschlußöffnung 18 in Verbindung, die den Anschluß weiterführender Fluidkanäle oder Fluidleitungen ermöglicht. Beim Ausführungsbeispiel ist eine Verbindung der ersten Anschlußöffnung 13 mit einer pneumatischen Druckquelle vorgesehen.

Die Zuströmöffnung 17 ist zweckmäßigerweise auf beiden Längsseiten von jeweils einer Abströmöffnung 22, 23 flankiert. Auch diese beiden Abströmöffnungen 22, 23 haben vorzugsweise lineare Längsgestalt, wobei sie sich mit geringem Abstand zur Zuströmöffnung 17 parallel zu dieser erstrecken. Zweckmäßigerweise haben sie die gleiche Länge wie die Zuströmöffnung 17 und liegen auf gleicher Höhe mit dieser.

Jede Abströmöffnung 22, 23 bildet das eine Ende eines in der Kanalschicht 3 verlaufenden und diese vorzugsweise quer zur Ausdehnungsebene durchsetzenden Abströmkanals 24, 25.

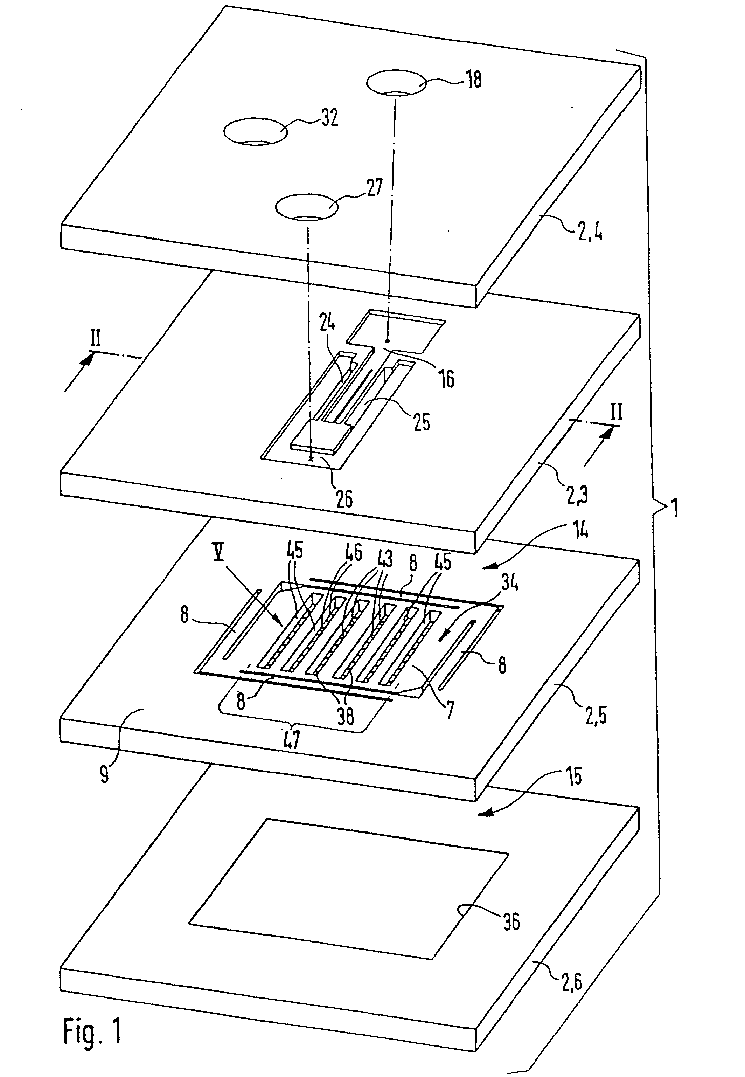

Aus Fig. 1 wird deutlich, daß die beiden Abströmkanäle 24, 25 zusammengeschaltet sein können. Beispielsgemäß kommunizieren sie miteinander über eine auf der Seite der Anschlußschicht 4 in die Kanalschicht 3 eingebrachte Verbindungsnut 26, die ihrerseits mit einer sie überdeckenden zweiten Anschlußöffnung 27 der Anschlußschicht 4 kommuniziert. Auch die zweite Anschlußöffnung 27 ist zur Verbindung mit weitergehenden Fluidkanälen oder Fluidleitungen vorgesehen und dient beim Ausführungsbeispiel zum Anschluß eines mit Druckluft zu versorgenden Verbrauchers, beispielsweise eines Pneumatikzylinders.

Zugunsten eines kompakten Aufbaus ist die Verbindungsnut 26 beim Ausführungsbeispiel in U-ähnlicher Konfiguration um den Zuströmkanal 16 herumgelegt.

Mit Hilfe eines im einzelnen nicht näher dargestellten, elektrisch betätigbaren Aktors läßt sich das Ventilglied 7 zu seiner Schaltbewegung 12 veranlassen, um es zwischen einer Offenstellung und einer Schließstellung umzuschalten. Zweckmäßigerweise kommt ein Aktor mit elektrostatischem Wirkprinzip zum Einsatz, der über zwei in Fig. 3 strichpunktiert angedeutete, Kondensatorflächen repräsentierende Elektroden 28, 28' verfügt, deren eine an der Kanalschicht 3 und deren andere am Ventilglied 7, jeweils im Bereich der ersten Teilkammer 14, vorgesehen ist. Die Elektroden 28, 28' können vom jeweiligen Schichtmaterial selbst oder von zusätzlich aufgebrachten Körpern gebildet sein. Die elektrischen Zuleitungen sind in nicht näher dargestellter Weise nach außen geführt, wozu eine weitere öffnung 32 in der Anschlußschicht 4 herangezogen werden kann.

Das Mikroventil 1 des Ausführungsbeispiels ist als Schließer ausgeführt. Solange an den Elektroden 28, 28' keine Spannung anliegt, nimmt das Ventilglied die in Fig. 3 gezeigte Offenstellung ein, bei der es, bedingt durch die Ausgestaltung der Haltearme 8, mit größerem Abstand zur Kanalschicht 3 angeordnet ist. In dieser Offenstellung ist es einem unter Druck über den Zuströmkanal 16 zugeführten Fluid möglich, über die erste Teilkammer 14 hindurch in die beiden Abströmkanäle 24, 25 gemäß Pfeilen 33 überzuströmen.

Das Anlegen einer Spannung an die Elektroden 28, 28' bewirkt ein Heranziehen des Ventilgliedes 7 an die Kanalschicht 3, bis ein an der der ersten Teilkammer 14 zugewandten ersten Ventilgliedfläche 34 vorgesehener Verschlußbereich 35 die Zuströmöffnung 17 fluiddicht abdeckt. Der Verschlußbereich 35 ist daher beim Ausführungsbeispiel ebenfalls mit Längserstreckung ausgeführt. Ist die Zuströmöffnung 17 verschlossen, befindet sich das Ventilglied 7 in der Schließstellung.

Bei Bedarf kann zur Verbesserung der Dichtwirkung im Umfangsbereich der Zuströmöffnung 17 an der Kanalschicht 3 und/oder am Ventilglied 7 eine umlaufende Dichtkante vorgesehen sein.

Die zweite Teilkammer 15 ist auf der dem Ventilglied 7 entgegengesetzten Seite von der Deckschicht 6 begrenzt. Diese ist bei der vorliegenden Ausgestaltung des Mikroventils als 2/2-Schaltventil kanallos nach Art eines einfachen Deckels ausgebildet. Um dem Ventilglied 7 einen ausreichenden Schalthub zu ermöglichen, kann die Deckschicht 6 allerdings an ihrer Innenfläche eine größenmäßig zumindest dem Umriß des beweglichen Ventilgliedes 7 entsprechende Aussparung 36 aufweisen.

Zur Realisierung eines anderen Ventiltyps, beispielsweise eines 3/2-Schaltventils, könnte die Deckschicht auch über wenigstens einen Kanal verfügen, so daß sie ebenfalls eine Kanalschicht bilden würde. Auf diese könnte dann bei Bedarf noch eine weitere Anschlußschicht folgen.

Wird das Mikroventil ausgehend von der Schließstellung in die Offenstellung umgeschaltet, würde sich das zuströmende Fluid normalerweise annähernd schlagartig über die gesamte erste Teilkammer 14, also über den zwischen dem Ventilglied 7 und der Kanalschicht 3 befindlichen Spalt, ausbreiten. Die dadurch anfänglich vorliegende Druckdifferenz zwischen den beiden Teilkammern 14, 15 - ein Druckausgleich würde sich erst allmählich einstellen, wenn das Fluid über die Durchbrechungen im Bereich der Haltearme 8 auch die zweite Teilkammer 15 gefüllt hätte -, würde das Ventilglied 7 gegen die Deckschicht 6 drücken, so daß den Aktorkräften hohe Kräfte entgegengesetzt wären, die ein erneutes rasches Umschalten in die Schließstellung beeinträchtigen würden. Das Mikroventil 1 ist daher mit in der Offenstellung des Ventilgliedes 7 wirksamen Druckentlastungsmitteln 37 ausgestattet.

Die Druckentlastungsmittel 37 enthalten eine der Anzahl der Abströmöffnungen 22, 23 entsprechende Anzahl von Expansionsvertiefungen 38, die in die erste Ventilgliedfläche 34 des Ventilgliedes 7 eingebracht sind. Jeder Abströmöffnung 22, 23 liegt eine der Expansionsvertiefungen 38 mit zugewandter öffnung 42 in Schaltrichtung 12 gegenüber. Dabei ist eine wenigstens teilweise überdeckung zwischen jeder Abströmöffnung 22, 23 und der dieser zugeordneten Expansionsvertiefung 38 vorgesehen, so daß sich mit anderen Worten eine jeweilige Abströmöffnung 22, 23 und die dieser zugewandte Öffnung 42 der zugeordneten Expansionsvertiefung 38 bei Blick in Schaltrichtung 12 wenigstens teilweise überlappen.

Beim Ausführungsbeispiel ist eine vollständige überlappung bzw. überdeckung der Abströmöffnungen 22, 23 und der diesen gegenüberliegenden öffnungen 42 vorgesehen. Dabei sind auch die Öffnungen 42 der Expansionsvertiefungen 38 schlitzartig mit linearer Längserstreckung ausgeführt und haben bezüglich der Zuströmöffnung 17 und der Abströmöffnungen 22, 23 einen parallelen Verlauf.

Des weiteren ist zweckmäßigerweise vorgesehen, daß die sich paarweise zugeordneten Abströmöffnungen 22, 23 und schlitzartigen öffnungen 42 der Expansionsvertiefungen 38 die gleiche Breite haben und sich mit zueinander fluchtenden Begrenzungskanten unmittelbar gegenüberliegen.

Auf Grund der paarweisen Anordnung von Expansionsvertiefungen 38 ergibt sich beim Ausführungsbeispiel eine Gestaltung des Ventilgliedes 7 derart, daß der Verschlußbereich 35 auf entgegengesetzten Längsseiten jeweils von einer der beiden Expansionsvertiefungen 38 flankiert ist.

Die Expansionsvertiefungen 38 stehen des weiteren durch das Ventilglied 7 hindurch mit der zweiten Teilkammer 15 in ständiger Fluidverbindung. Beim Ausführungsbeispiel ist dies dadurch realisiert, daß die Expansionsvertiefungen 38 nutähnlich mit Längsgestalt ausgeführt sind und über mehrere Entlastungskanäle 43 mit der zweiten Teilkammer 15 kommunizieren. Diese Entlastungskanäle 43 münden an in Längsrichtung der jeweiligen Expansionsvertiefung 38 beabstandeten Stellen in die jeweilige Expansionsvertiefung 38 ein.

Die Anordnung und Ausrichtung der Expansionsvertiefungen 38 ist so getroffen, daß sich ihre Längsrichtung quer zur überströmrichtung des gemäß Pfeilen 33 von der Zuströmöffnung 17 zu den Abströmöffnungen 22, 23 überströmenden Fluides erstreckt. Das über die Zuströmöffnung 17 zuströmende Fluid wird nach dem Eintritt in die erste Teilkammer 14 zunächst durch das Ventilglied 7 quer zur Längsrichtung der Zuströmöffnung 17 umgelenkt und in den sich beidseits an die Zuströmöffnung 17 anschließenden Teilkammerabschnitten 44 auf Grund der Enge des zur Verfügung gestellten Strömungsquerschnittes mit einer Art Düsenwirkung beschleunigt. Im Anschluß daran gelangt die Fluidströmung jedoch in den Bereich der sich gegenüberliegenden Abströmöffnungen 22, 23 und Expansionsvertiefungen 38, wo das beschleunigte Druckmedium unter Wirbelbildung expandieren kann und sich eine Art Expansionsblase ausbildet, was gleichzeitig eine starke Reduzierung der Strömungsgeschwindigkeit zur Folge hat. Dadurch wird zum einen die erforderliche Umlenkung der Fluidströmung in die Abströmkanäle 24, 25 begünstigt. Außerdem stellt sich eine bevorzugte Fluidströmung durch die Expansionsvertiefungen 38 und die Entlastungskanäle 43 hindurch zur zweiten Teilkammer 15 ein. Letzteres bewirkt einen raschen Druckaufbau auch in der zweiten Teilkammer 15, so daß das Ventilglied 7 an seinen entgesetzten Ventilgliedflächen schon nach kürzester Zeit dem gleichen Druck ausgesetzt ist. Dadurch ist das Ventilglied 7 druckentlastet, die auf es einwirkenden resultierenden Druckkräfte sind auf ein Minimum reduziert. Dadurch ist der vorgesehene Aktor in der Lage, schnelle Schaltvorgänge herbeizuführen. Es wäre denkbar, die Expansionsvertiefungen 38 als schlitzartige Durchbrechungen auszuführen, die das Ventilglied 7 über seine gesamte Dicke durchsetzen. Eine Unterteilung der Fluidverbindung in einzelne Entlastungskanäle 43 hat allerdings den Vorteil des Erhalts einer festigkeitsmäßig steifen Struktur des Ventilgliedes 7, was sich positiv auf das Schaltverhalten und die Abdichtqualität in der Schließstellung auswirkt.

Um die Druckausgleichsgeschwindigkeit noch weiter zu erhöhen, ist das Ventilglied 7 des Ausführungsbeispiels an der ersten Ventilgliedfläche 34 mit weiteren Ausnehmungen versehen, die Zusatz-Expansionsvertiefungen 45 bilden. Sie können eine weitere Expansion der Fluidströmung bewirken, die an den vorgeschalteten Expansionsvertiefungen 38 vorbei zum Rand der Ventilkammer 13 strömt.

Auf den voneinander abgewandten Längsseiten beider Expansionsvertiefungen 38 befindet sich jeweils mindestens eine beabstandete Zusatz - Expansionsvertiefung 45 mit parallelem Verlauf. Beim Ausführungsbeispiel sind zweckmäßigerweise jeweils zwei untereinander beabstandete Zusatz-Expansionsvertiefungen 45 vorgesehen. Ihre Ausgestaltung kann zweckmäßigerweise derjenigen der Expansionsvertiefungen entsprechen, so daß sie über Zusatz-Entlastungskanäle 46 ebenfalls durch das Ventilglied 7 hindurch mit der zweiten Teilkammer 14 kommunizieren.

In der beim Ausführungsbeispiel verwirklichten bevorzugten Bauform bilden die Expansionsvertiefungen 38 und die Zusatz-Expansionsvertiefungen 45 eine erste Gruppe 47 zueinander paralleler nutartiger Vertiefungen, die in die erste Ventilgliedfläche 34 eingebracht sind. Zur Realisierung der Entlastungskanäle 43 und Zusatz-Entlastungskanäle 46 ist das Ventilglied 7 auf der entgegengesetzten zweiten Ventilgliedfläche 34' mit einer zweiten Gruppe 48 untereinander paralleler nutartiger Vertiefungen 52 versehen. Diese verlaufen quer zu den Vertiefungen der ersten Gruppe 47, so daß sich eine über-Kreuz-Anordnung ergibt, wobei die Tiefe der Vertiefungen der beiden Gruppen 47, 48 so gewählt ist, daß die beiderseitigen Vertiefungen an ihren Kreuzungsstellen ineinander übergehen. Die übergangsbereiche 53 zwischen den Vertiefungen der beiden Gruppen 47, 48 bilden somit gemeinsam mit den Vertiefungen 52 die Entlastungskanäle 43 und gegebenenfalls vorhandenen Zusatz-Entlastungskanäle 46.

Bevorzugt bestehen insbesondere die Kanalschicht 3 und die Ventilgliedschicht 5 aus [1 1 0]-Silicium, wobei die gewünschten Strukturen durch Ätzung herausgearbeitet sind. Die Deckschicht 6 besteht zweckmäßigerweise aus dem gleichen Material. Für die Anschlußschicht 4 bietet sich besonders Glasmaterial an. Allerdings sind jeweils auch andere Materialien verwendbar, beispielsweise Kunststoffmaterial, das beispielsweise durch gängige Abformtechniken strukturiert werden kann.

Anstelle eines plattenartig starren Ventilgliedes 7 könnte auch ein zumindest partiell biegeflexibles und beispielsweise membranartiges Ventilglied eingesetzt werden. Bei membranartiger Ausgestaltung bietet sich eine vollelastische Ausführung aus Kunststoffmaterial an.

## Patentansprüche

1. Mikroventil, mit einer Ventilkammer (13), in der sich ein die Ventilkammer (13) in zwei Teilkammern (14, 15) unterteilendes, membran- oder plattenartiges Ventilglied (7) befindet, mit einer dem ventilglied (7) gegenüberliegenden, eine erste der beiden Teilkammern (14, 15) begrenzenden Kanalschicht (2, 3), die an ihrer dem Ventilglied (7) zugewandten Seite eine mit einem Zuströmkanal (16) kommunizierende Zuströmöffnung (17) und mindestens eine mit einem Abströmkanal (24, 25) kommunizierende Abströmöffnung (22, 23) aufweist, wobei das Ventilglied (7) zwischen einer die Zuströmöffnung (17) verschließenden Schließstellung und einer die Zuströmöffnung (17) freigebenden und dabei ein Überströmen von Fluid vom Zuströmkanal (17) zum Abströmkanal (24, 25) durch die erste Teilkammer (14) hindurch ermöglichenden Offenstellung bewegbar ist, und mit in der Offenstellung des Ventilgliedes (7) wirksamen Druckentlastungsmitteln, die wenigstens eine mit zumindest teilweiser Überdeckung gegenüberliegend der Abströmöffnung (22, 23) am Ventilglied (7) vorgesehene Expansionsvertiefung (38) enthalten, die durch das Ventilglied (7) hindurch mit der zweiten Teilkammer (15) in Verbindung steht, **dadurch gekennzeichnet, daß** am Ventilglied (7) gegenüberliegend einem Bereich, der sich auf der der Zuströmöffnung (17) entgegengesetzten Seite der zugeordneten Abströmöffnung (22, 23) befindet, mit Abstand neben mindestens einer eine Expansion ermöglichenden Expansionsvertiefung (38) eine oder mehrere Zusatzexpansionsvertiefungen (45) vorgesehen sind, die ebenfalls durch das Ventilglied (7) hindurch mit der zweiten Teilkammer (15) kommunizieren, und daß die Schaltvorgänge durch auf das Ventilglied (7) wirkende, auf nicht-fluidischem Wirkprinzip erzeugbare Schaltkräfte hervorgerufen werden.

2. Mikroventil nach Anspruch 1, **dadurch gekennzeichnet, daß** die Expansionsvertiefung (38) die ihr zugeordnete Abströmöffnung (22, 23) vollständig überdeckt.

3. Mikroventil nach Anspruch 1 oder 2, **dadurch gekennzeichnet, daß** die der Kanalschicht (3) zugewandte Öffnung (42) der Expansionsvertiefung (38) die gleiche Breite wie die ihr gegenüberliegende Abströmöffnung (22, 23) aufweist.

4. Mikroventil nach einem der Ansprüche 1 bis 3, **dadurch gekennzeichnet, daß** die Expansionsvertiefung (38) als das Ventilglied (7) über seine gesamte Dicke durchsetzende, sich quer zur Überströmrichtung (33) des Fluides erstreckende schlitzartige Durchbrechung ausgeführt ist.

5. Mikroventil nach einem der Ansprüche 1 bis 3, **dadurch gekennzeichnet, daß** die Expansionsvertiefung (38) nutähnlich mit Längsgestalt ausgeführt ist und sich quer zur Überströmrichtung (33) erstreckt, wobei sie über mindestens einen das Ventilglied (7) durchsetzenden Entlastungskanal (43) mit der zweiten Teilkammer (15) kommuniziert.

6. Mikroventil nach Anspruch 5, **dadurch gekennzeichnet, daß** die Expansionsvertiefung (38) gleichzeitig über mehrere Entlastungskanäle (43) mit der zweiten Teilkammer (15) kommuniziert, die an in Längsrichtung der Expansionsvertiefung (38) mit Abstand aufeinanderfolgenden Stellen in die Expansionsvertiefung (38) einmünden.

7. Mikroventil nach einem der Ansprüche 1 bis 6, **dadurch gekennzeichnet, daß** die mindestens eine Abströmöffnung (22, 23) und die dieser zugewandte Öffnung (42) der Expansionsvertiefung (38) schlitzartig ausgeführt sind.

8. Mikroventil nach Anspruch 7, **dadurch gekennzeichnet, daß** die Zuströmöffnung (17) schlitzartig ausgeführt ist.

9. Mikroventil nach Anspruch 7 oder 8, **gekennzeichnet durch** einen zueinander parallelen Verlauf der schlitzartigen Öffnungen (17, 22, 23, 42).

10. Mikroventil nach einem der Ansprüche 7 bis 9, **gekennzeichnet durch** einen linearen Verlauf der schlitzartigen Öffnungen (17, 22, 23, 42).

11. Mikroventil nach einem der Ansprüche 7 bis 10, **dadurch gekennzeichnet, daß** die Zuströmöffnung (17) auf einander entgegengesetzten Seiten von jeweils einer Abströmöffnung (22, 23) flankiert ist, wobei jeder Abströmöffnung (22, 23) eine Expansionsvertiefung (38) gegenüberliegt.

12. Mikroventil nach Anspruch 11, **dadurch gekennzeichnet, daß** auf den voneinander abgewandten Längsseiten der beiden Expansionsvertiefungen (38) jeweils mindestens eine Zusatz-Expansionsvertiefung (46) vorgesehen ist.

13. Mikroventil nach einem der Ansprüche 1 bis 12, **dadurch gekennzeichnet, daß** in den beiden den Teilkammern (14, 15) zugewandten Ventilgliedflächen (34, 34') jeweils eine Gruppe (47, 48) zueinander paralleler nutartiger Vertiefungen vorgesehen ist, wobei die Vertiefungen beider Gruppen (47, 48) quer zueinander verlaufen und mit einer Tiefe ausgeführt sind, daß sie an den Kreuzungsstellen (53) ineinander übergehen, wobei sich unter den der ersten Teilkammer (34) zugeordneten Vertiefungen die mindestens eine Expansionsvertiefung (38) und gegebenenfalls die mindestens eine Zusatz-Expansionsvertiefung (46) befindet.

14. Mikroventil nach einem der Ansprüche 1 bis 13, **dadurch gekennzeichnet, daß** der der Zuströmöffnung (17) gegenüberliegende Bereich des Ventilgliedes (7) einen in der Schließstellung die Zuströmöffnung (17) abdeckenden Verschlußbereich (35) bildet, der auf entgegengesetzten Seiten jeweils von einer Expansionsvertiefung (38) flankiert ist.

15. Mikroventil nach einem der Ansprüche 1 bis 14, **dadurch gekennzeichnet, daß** die zweite Teilkammer (15) von einer kanallosen Deckschicht (6) oder einer weiteren, mindestens einen Fluidkanal enthaltenden Kanalschicht begrenzt ist.

16. Mikroventil nach einem der Ansprüche 1 bis 15, **dadurch gekennzeichnet, daß** das Ventilglied (7) beweglicher Bestandteil einer an der Kanalschicht (3) angeordneten Ventilgliedschicht (5) ist.

## Claims

1. Microvalve with a valve chamber (13) containing a membrane- or plate-like valve member (7) dividing the valve chamber (13) into two sub-chambers (14, 15), with a passage layer (2, 3) opposite the valve member (7) bounding a first of the two sub-chambers (14, 15) and having on that side of it which faces the valve member (7) an inflow port (17) communicating with an inflow passage (16) and one or more outflow ports (22, 23) communicating with an outflow passage (24,25), wherein the valve member (7) may be moved between a closed position closing the inflow port (17) and an open position which opens the inflow port (17) and in so doing allows fluid to overflow from the inflow passage (17) to the outflow passage (24, 25) through the first sub-chamber (14), and with pressure relief means effective in the open position of the valve member (7) and containing at least one expansion recess (38) provided on the valve member (7) with at least partial cover opposite the outflow port (22, 23) and connected to the second sub-chamber (15) through the valve member (7), **characterised in that**, provided on the valve member (7) opposite an area on the side of the assigned outflow port (22, 23) opposite the inflow port (17), with clearance from one or more expansion recesses (38) which allow expansion, are one or more additional expansion recesses (45), which similarly communicate with the second sub-chamber (15) through the valve member (7), and that the switching processes are generated by switching forces acting on the valve member (7) and which may be produced by an operating principle which is not fluidic.

2. Microvalve according to claim 1, **characterised in that** the expansion recess (38) fully covers its assigned outflow port (22, 23).

3. Microvalve according to claim 1 or 2, **characterised in that** the opening (42) of the expansion recess (38) facing the passage layer (3) has the same width as the outflow port (22, 23) lying opposite to it.

4. Microvalve according to any of claims 1 to 3, **characterised in that** the expansion recess (38) is in the form of a slot-like opening passing through the valve member (7) over the whole of its thickness and extending at right-angles to the direction of overflow (33) of the fluid.

5. Micro valve according to any of claims 1 to 3, **characterised in that** the expansion recess (38) is slot-like and elongated in form, extending at right-angles to the direction of overflow (33), while communicating with the second sub-chamber (15) via one or more relief passages (43) which pass through the valve member (7).

6. Microvalve according to claim 5, **characterised in that** the expansion recess (38) communicates with the second sub-chamber (15) simultaneously via several relief passages (43) which lead into the expansion recess (38) at consecutive points spaced apart in the longitudinal direction of the expansion recess (38).

7. Microvalve according to any of claims 1 to 6, **characterised in that** the outflow port or ports (22, 23) and the opening(s) (42) of the expansion recess (38) which face them are slot-like in form.

8. Microvalve according to claim 7, **characterised in that** the inflow port (17) is slot-like in form.

9. Microvalve according to claim 7 or 8, **characterised by** the slot-like openings (17, 22, 23, 42) running parallel to one another.

10. Microvalve according to any of claims 7 to 9, **characterised by** a linear course of the slot-like openings (17, 22, 23, 42).

11. Microvalve according to any of claims 7 to 10, **characterised in that** the inflow port (17) is flanked on opposite sides in each case by an outflow port (22, 23), with an expansion recess (38) opposite each outflow port (22, 23).

12. Microvalve according to claim 11, **characterised in that** in each case one or more additional expansion recesses (46) is or are provided on the long sides of the expansion recesses (38) which face away from one another.

13. Microvalve according to any of claims 1 to 12, **characterised in that**, provided in each of the valve member faces (34, 34') facing the sub-chambers (14, 15) is a group (47, 48) of slot-like recesses parallel to one another, while the recesses of both groups (47, 48) run at right-angles to one another and are made with a depth such that they merge into one another at the intersection points (53), with the recesses assigned to the first sub-chamber (34) including one or more of the expansion recesses (38) and where applicable one or more of the additional expansion recesses (46).

14. Microvalve according to any of claims 1 to 13, **characterised in that** the section of the valve member (7) opposite the inflow port (17) forms a sealing section (35) covering the inflow port (17) in the closed position and flanked on each opposing side by an expansion recess (38).

15. Microvalve according to any of claims 1 to 14, **characterised in that** the second sub-chamber (15) is bounded by an outer layer (6) without passages or by a further passage layer containing one or more fluid passages.

16. Microvalve according to any of claims 1 to 15, **characterised in that** the valve member (7) is a movable part of a valve member layer (5) arranged on the passage layer (3).

## Revendications

1. Micro-soupape avec une chambre de soupape (13) dans laquelle se trouve un élément de soupape (7) semblable à une membrane ou à une plaque et partageant la chambre de soupape (13) en deux chambres partielles (14, 15), avec une couche de canal (2, 3) située en face de l'élément de soupape (7) et délimitant une première des deux chambres partielles (14, 15) laquelle présente une ouverture d'entrée (17) sur son côté tourné vers l'élément de soupape (7) en communication avec un canal d'arrivée (16) et au moins une ouverture de sortie (22, 23) en communication avec un canal de départ (24, 25), l'élément de soupape (7) pouvant se déplacer d'une position de fermeture où il ferme l'ouverture d'entrée (17) vers une position d'ouverture libérant l'ouverture d'entrée (17) en rendant ainsi possible un écoulement de fluide depuis le canal d'arrivée (17) vers le canal de départ (24, 25) en traversant la première chambre partielle (14), et avec des moyens de décompression actifs en position ouverte de l'élément de soupape (7), lesquels comprennent au moins un creux à détente (38) prévu sur l'élément de soupape (7) et situé en face de l'ouverture de sortie (22, 23) avec un recouvrement au moins partiel, lequel est en relation avec la deuxième chambre partielle (15) en traversant l'élément de soupape (7), **caractérisée en ce que** sur l'élément de soupape (7), en face d'une zone se trouvant du côté opposé à l'ouverture d'entrée (17) de l'ouverture de sortie (22, 23) associée, un ou plusieurs creux à détente additionnels (45) sont prévus à distance à côté d'au moins un creux à détente (38) permettant une détente, lesquels communiquent également avec la deuxième chambre partielle (15) en traversant l'élément de soupape (7), et **en ce que** les processus de manoeuvre sont provoqués par des forces de manoeuvre pouvant être produites selon un principe d'action non fluidique et agissant sur l'élément de soupape (7).

2. Micro-soupape selon la revendication 1, **caractérisée en ce que** le creux à détente (38) recouvre entièrement l'ouverture de sortie (22, 23) qui lui est associée.

3. Micro-soupape selon l'une quelconque des revendications 1 ou 2, **caractérisée en ce que** l'ouverture (42) du creux à détente (38) tournée vers la couche de canal (3) présente la même largeur que l'ouverture de sortie (22, 23) qui se situe en face d'elle.

4. Micro-soupape selon l'une des revendications 1 à 3, **caractérisée en ce que** le creux à détente (38) est réalisé en tant que brèche semblable à une fente traversant l'élément de soupape (7) sur toute son épaisseur et s'étendant transversalement à la direction d'écoulement (33) du fluide.

5. Micro-soupape selon l'une des revendications 1 à 3, **caractérisée en ce que** le creux à détente (38) est réalisé à la manière d'une rainure avec une forme longitudinale, et s'étend transversalement à la direction d'écoulement (33), et **en ce qu'**il communique avec la deuxième chambre partielle (15) via au moins un canal de décharge (43) traversant l'élément de soupape (7).

6. Micro-soupape selon la revendication 5, **caractérisée en ce que** le creux à détente (38) communique simultanément avec la deuxième chambre partielle (15) via plusieurs canaux de décharge (43), lesquels débouchent dans le creux à détente (38) en des emplacements se succédant à distance en direction longitudinale du creux à détente (38).

7. Micro-soupape selon l'une des revendications 1 à 6, **caractérisée en ce que** au moins l'une des ouvertures d'écoulement (22, 23) et l'ouverture (42) du creux à détente (38) lui faisant face, sont réalisées à la manière d'une fente.

8. Micro-soupape selon la revendication 7, **caractérisée en ce que** l'ouverture d'entrée (17) est réalisée à la manière d'une fente.

9. Micro-soupape selon la revendication 7 ou 8, **caractérisée par** un tracé parallèle entre elles des ouvertures semblables à des fentes (17, 22, 23, 42).

10. Micro-soupape selon l'une des revendications 7 à 9, **caractérisée par** un tracé linéaire des ouvertures (17, 22, 23, 42) semblables à des fentes.

11. Micro-soupape selon l'une des revendications 7 à 10, **caractérisée en ce que** l'ouverture d'entrée (17) est flanquée de respectivement une ouverture de sortie (22, 23) sur des côtés opposés l'un par rapport à l'autre, un creux à détente (38) se situant en face de chaque ouverture de sortie (22, 23).

12. Micro-soupape selon la revendication 11, **caractérisée en ce que** sur les côtés longitudinaux opposés l'un par rapport à l'autre des deux creux à détente (38), respectivement au moins un creux à détente additionnel (46) est prévu.

13. Micro-soupape selon l'une des revendications 1 à 12, **caractérisée en ce que** dans les deux surfaces d'élément de soupape (34,34') tournées vers les chambres partielles (14, 15), respectivement un groupe (47, 48) de creux semblables à des rainures et parallèles les uns aux autres sont prévus, les creux des deux groupes (47, 48) s'étendant transversalement les uns par rapport aux autres et étant réalisés avec une profondeur de manière à se fondre les uns dans les autres aux points de croisement (53), sous les creux associés à la première chambre partielle (34), se trouvant l'un au moins des creux à détente (38) et le cas échéant l'un au moins des creux à détente additionnels (46).

14. Micro-soupape selon l'une des revendications 1 à 13, **caractérisée en ce que** la zone de l'élément de soupape (7) située en face de l'ouverture d'entrée (17) forme une zone de fermeture (35) recouvrant en position fermée l'ouverture d'entrée (17), laquelle zone est flanquée sur des côtés opposés de respectivement un creux à détente (38).

15. Micro-soupape selon l'une des revendications 1 à 14, **caractérisée en ce que** la deuxième chambre partielle (15) est délimitée par une couche de recouvrement (6) sans canal ou par une autre couche de canal comprenant au moins un canal à fluide.

16. Micro-soupape selon l'une des revendications 1 à 15, **caractérisée en ce que** l'élément de soupape (7) est un élément constitutif mobile d'une couche d'élément de soupape (6) disposée sur la couche de canal (3).
